# EUROPEAN PATENT APPLICATION

(11) **EP 1 524 782 A2**
(43) Date of publication of application: **20.04.2005**
(21) Application number: 04011463.9
(22) Date of filing: 13.05.2004
(51) Int. Cl.: H04B 10/148

(54) **Optical synchronisation arrangement**

(30) Priority: 14.10.2003 US 685325
(71) Applicant: Agilent Technologies, Inc., Palo Alto, CA 94306 (US)
(72) Inventor: Law, Joanne Y., Sunnyvale, CA 94086 (US); Baney, Douglas M., Los Altos, CA 94024 (US)
(74) Representative: Liesegang, Roland, Dr.-Ing.

(57) **Abstract**

Ensuring that a tunable device (108; 608), such as a tunable optical filter, accurately tracks the wavelength of a local oscillator signal involves a controller (110; 610) that generates (704) at least one synchronization signal as the local oscillator signal is swept (702) across a range of wavelengths and adjusts (706) an operating characteristic of the tunable device in response to the at least one synchronization signal. Before the local oscillator signal is swept across the range of wavelengths, the operating characteristic of the tunable device and the wavelength of the local oscillator signal are initially set (700) to matching values.

## Description

### FIELD OF THE INVENTION

The invention relates generally to the field of optical filtering systems, and more particularly to a system and method for synchronizing the filter wavelength of an optical filter with the wavelength of a swept local oscillator signal.

### BACKGROUND OF THE INVENTION

Dense wavelength division multiplexing (DWDM) requires optical spectrum analyzers (OSAs) that have higher spectral resolution than is typically available with current OSAs. For example, grating-based OSAs and autocorrelation-based OSAs encounter mechanical constraints, such as constraints on beam size and the scanning of optical path lengths, which limit the resolution that can be obtained. As an alternative to grating-based and autocorrelation-based OSAs, optical heterodyne detection systems can be utilized to monitor DWDM systems. Optical heterodyne detection systems are not limited by the mechanical constraints that limit the grating-based and autocorrelation-based OSAs.

In order to improve the performance of optical heterodyne detection systems with regard to parameters such as sensitivity and dynamic range, it is best for the heterodyne signal to have a high signal-to-noise ratio. However, the signal-to-noise ratio of the heterodyne signal is often degraded by noise that is contributed from the direct detection signals, especially in the DWDM case where the input signal includes closely spaced carrier wavelengths. Optical pre-selectors improve the signal-to-noise ratio of the heterodyne signal. During optical heterodyne detection, a local oscillator signal is swept across a range of wavelengths. For an optical pre-selector to be effective, it is important that the filter wavelength, also referred to as the "passband" of the optical pre-selector, accurately tracks the wavelength of the swept local oscillator signal.

### SUMMARY OF THE INVENTION

In accordance with the invention, ensuring that a tunable device, such as an optical filter, accurately tracks the wavelength of a local oscillator signal involves generating at least one synchronization signal as the local oscillator signal is swept across a range of wavelengths and adjusting an operating characteristic of the tunable device in response to the at least one synchronization signal.

The technique for synchronizing an operating characteristic of a tunable device with a swept local oscillator signal can be applied to an optical heterodyne detection system that includes an optical pre-selector that is tuned to track the wavelength of the swept local oscillator signal.

Synchronizing an operating characteristic of a tunable device with the wavelength of a swept local oscillator signal using synchronization signals enables accurate tracking of a swept local oscillator signal in an "open-loop" manner as opposed to other "closed-loop" synchronization techniques that require a portion of the local oscillator signal to be applied to the tunable device during wavelength tracking.

### BRIEF DESCRIPTION OF THE DRAWINGS

Fig. 1 depicts an embodiment in accordance with the invention of an optical heterodyne detection system, which includes an optical pre-selector that is equipped to accurately track the wavelength a local oscillator signal.

Fig. 2A depicts an input signal as three optical carriers in a WDM system in relation to a swept local oscillator signal before the input signal has entered an optical pre-selector in accordance with the invention.

Fig. 2B depicts the one optical carrier that exits the optical pre-selector after the input signal of Fig. 2A has been filtered in accordance with the invention.

Fig. 3 depicts an optical carrier that exits the optical pre-selector after the input signal of Fig. 2 has been filtered in relation to a swept local oscillator signal and the optical pre-selector passband that are offset from each other in accordance with the invention.

Fig. 4 depicts a plot of a relationship between the drive signal that is applied to an acousto-optic tunable filter and the corresponding filter wavelength in accordance with the invention.

Fig. 5 is a plot of signal power versus wavelength that depicts a local oscillator signal and synchronization signal locations in accordance with the invention.

Fig. 6 depicts a system for synchronizing the filter wavelength of a tunable filter with the wavelength of a local oscillator signal as the local oscillator signal is swept across a range of wavelengths in accordance with the invention.

Fig. 7 depicts a process flow diagram of a method for synchronizing the filter wavelength of an optical filter with the wavelength of a local oscillator signal.

Fig. 8 depicts a process flow diagram of a method for monitoring an optical signal utilizing optical heterodyne detection in accordance with the invention.

### DETAILED DESCRIPTION OF THE INVENTION

Ensuring that a tunable optical pre-selector accurately tracks the wavelength of a local oscillator signal involves generating at least one synchronization signal as the local oscillator signal is swept across a range of wavelengths and adjusting the filter wavelength of the optical pre-selector in response to the at least one synchronization signal. In an embodiment in accordance with the invention, the filter wavelength of the optical pre-selector and the wavelength of the local oscillator signal are initially set to matching values.

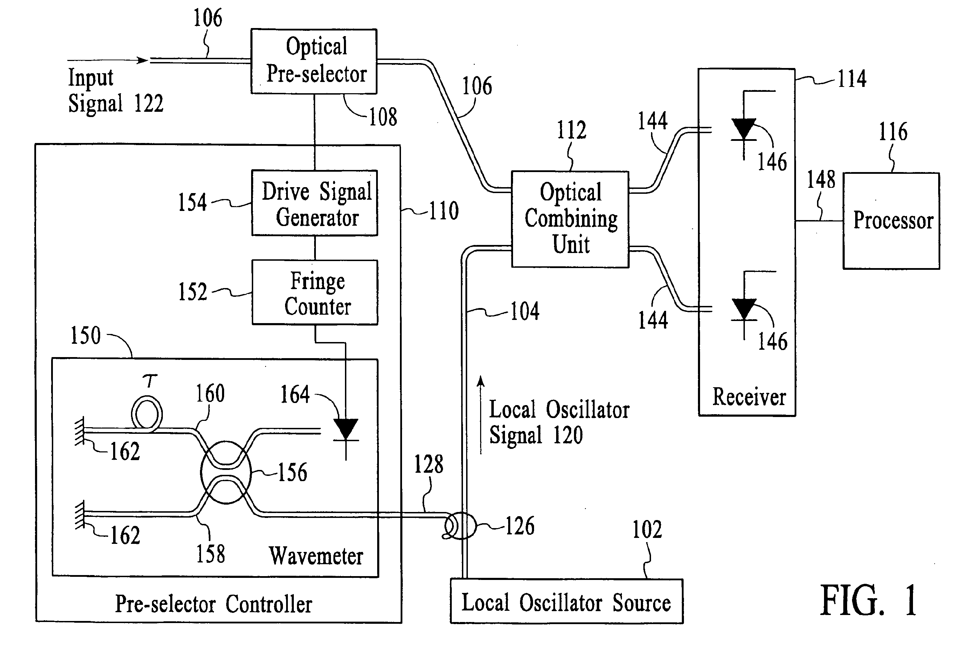

Fig. 1 depicts an embodiment in accordance with the invention of an optical heterodyne detection system, which includes an optical pre-selector that is equipped to accurately track the wavelength a local oscillator signal. The optical heterodyne detection system of Fig. 1 includes a local oscillator source 102, a signal fiber 106, an optical pre-selector 108, a pre-selector controller 110, an optical combining unit 112, a receiver 114, and a processor 116. It should be noted that throughout the description similar reference numerals may be utilized to identify similar elements.

The local oscillator source 102 generates a local oscillator signal 120. In an embodiment, the local oscillator source is a highly coherent tunable laser that is continuously swept over a range of 20 GHz or greater. During optical detection, the local oscillator signal is typically swept across a range of wavelengths, or frequencies, in order to detect an input signal over the range of wavelengths. In an embodiment, the sweep rate of the local oscillator signal at 1,550 nanometers is approximately 100 nm/s or 12.5 MHz/us and the sweep range is approximately 100 nm. However, the sweep rate and sweep range can be higher or lower. In one embodiment, sweeping the local oscillator signal across a range of wavelengths involves incrementally tuning the local oscillator signal to different wavelengths with abrupt phase changes. In another embodiment in accordance with the invention, sweeping the local oscillator signal across a range of wavelengths involves a smooth transition between wavelengths, with smooth "accordion-like" phase changes.

The local oscillator source 102 is in optical communication with the optical combining unit 112. In the embodiment of Fig. 1, a local oscillator fiber 104 optically connects the local oscillator source to the optical combining unit. The local oscillator fiber 104 may be an optical fiber, such as a single mode optical fiber, that forms an optical path for carrying the local oscillator signal 120 to the optical combining unit. The local oscillator fiber may include a polarization controller (not shown) that controls the polarization state of the local oscillator signal. Other optical waveguides may be utilized in place of single mode optical fiber to form an optical path, such as polarization preserving fiber. Alternatively, the local oscillator signal may be transmitted along an optical path through free space without the use of a waveguide. The local oscillator source is also in optical communication with the pre-selector controller 110. In an embodiment not shown in Fig. 1, the local oscillator source is additionally in electrical communication with the pre-selector controller 110 to provide absolute wavelength or other information as required to facilitate the pre-selector controller tracking function. In the embodiment of Fig. 1, a coupler 126 and a fiber 128 are used to tap a portion of the local oscillator signal from the local oscillator fiber.

The signal fiber 106 forms an optical path for carrying an input signal 122 that is to be detected by the system. In an embodiment, the signal fiber is a single mode optical fiber as is known in the art, although other optical waveguides may be utilized to form an optical path. In addition, although waveguides are described, optical signals may be input into the system, or transmitted within the system, in free space.

The input signal 122 includes optical signals that are generated from conventional devices as is known in the field of optical communications systems. For example, the input signal may be generated by a laser or lasers. The input signal may consist of a single wavelength or multiple wavelengths as is known in the field of wavelength division multiplexing (WDM). The input signal may bean optical signal having unknown optical characteristics, in which case the optical heterodyne detection system can be utilized for optical spectrum analysis. The input signal may alternatively be a delayed portion of the local oscillator signal that is utilized for optical network analysis or optical component analysis. When the monitoring system is being utilized for optical network or component analysis, the characteristics of a network or a single network component can be determined by inputting a known input signal, such as a fraction of the local oscillator signal, into the network or the single network component and then measuring the response to the known signal.

The optical pre-selector 108 is optically connected to the input fiber 106 to receive the input signal 122. The optical pre-selector is a tunable bandpass filter that is tuned in response to a drive signal to track the local oscillator signal 120 as the local oscillator is swept across a range of wavelengths. That is, the optical pre-selector is tuned so that the optical pre-selector has the highest optical transmission at a wavelength that is related to the wavelength of the swept local oscillator signal. Tracking the local oscillator signal may involve tuning the optical pre-selector so that the highest optical transmission is substantially centered at the wavelength of the local oscillator signal or tuning the operating wavelength of the optical pre-selector so that the highest optical transmission wavelength is offset from the local oscillator wavelength by a known differential.

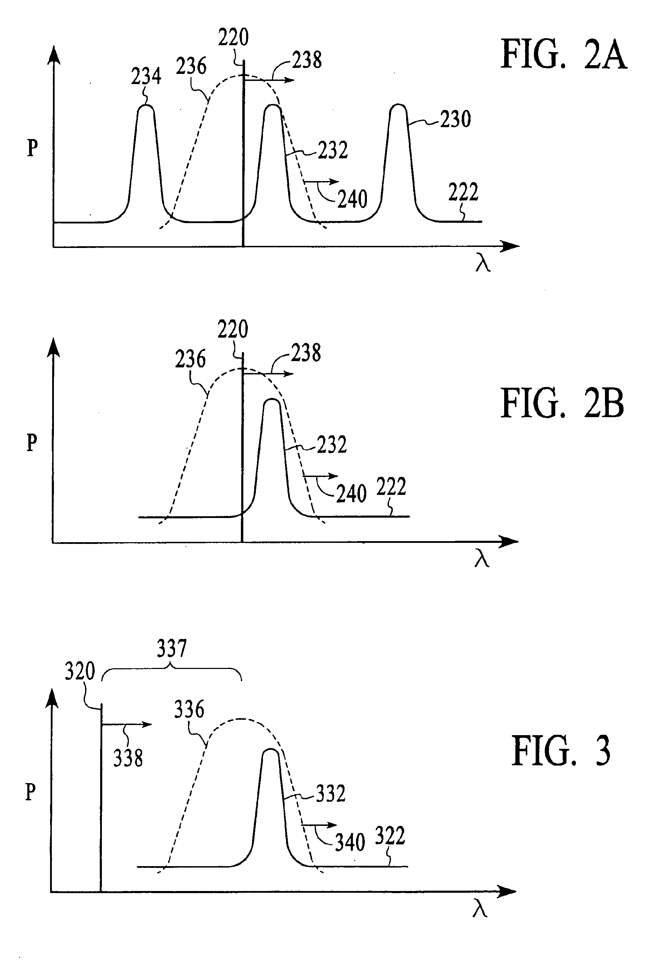

Operation of the optical pre-selector 108 in a WDM system is depicted in the signal power vs. wavelength graphs of Figs. 2A, 2B, and 3. Fig. 2A depicts an input signal 222 as three optical carriers 230, 232, and 234 in a WDM system in relation to a swept local oscillator signal 220 before the input signal has entered the optical pre-selector. For example purposes, the dashed line 236 represents the passband of the optical pre-selector that is tuned to track the sweep of the local oscillator signal. Optical signals within the passband continue to be transmitted and optical signals outside of the passband are not transmitted. The sweep of the local oscillator signal and the tracking of the optical pre-selector passband are represented by the horizontal arrows 238 and 240 respectively. The passband of the optical pre-selector may also be referred to herein as the filter wavelength of the optical pre-selector. The term filter wavelength relates generally to the center wavelength of the filter passband and it should be understood to include the entire passband of the pre-selector.

Fig. 2B depicts the one optical carrier 232 that exits the optical pre-selector after the input signal has been filtered. As shown by Fig. 2B, the optical pre-selector filters out optical carriers that are not near the wavelength of the swept local oscillator signal 220 (i.e., outside the passband of the optical pre-selector). In the embodiment of Fig. 1, the optical carriers that are not near the wavelength of the swept local oscillator signal are not necessary for optical heterodyne detection and only contribute to noise in the detection system if not filtered. Optical bandpass filtering that tracks the wavelength of the swept local oscillator signal is particularly useful when measuring broadband optical noise, such as amplified spontaneous emissions from an optical amplifier.

Fig. 3 depicts an example that is similar to Fig. 2B except that the optical pre-selector is tuned such that the center of the filter passband 336 tracks the sweep of the local oscillator signal 320 by an offset 337. Tuning the center of the filter passband to track the local oscillator signal by an offset is done to generate the heterodyne signal at a higher frequency, for example, in a situation where optical image rejection is important.

Referring back to Fig. 1, the pre-selector controller 110 is operationally connected to control the filter wavelength, or passband, of the optical pre-selector 108 such that the filter wavelength tracks the wavelength of the swept local oscillator signal 120. A technique for synchronizing the filter wavelength of the optical pre-selector with the swept local oscillator signal is described in detail below after the description of the basic function of the optical heterodyne detection system. As stated above, the pre-selector controller receives a tapped portion of the swept local oscillator signal from the local oscillator source 102. The pre-selector controller is also operationally connected to the optical pre-selector such that a drive signal can be provided to the optical pre-selector.

The optical combining unit 112 is in optical communication with both the local oscillator source 102 and the optical pre-selector 108. The optical combining unit optically combines the input signal 122 and the local oscillator signal 120 into a combined optical signal and outputs at least one portion of the combined optical signal to the receiver 114. In an embodiment, the optical combining unit includes an optical coupler that outputs the combined optical signal into at least one optical path. The optical coupler may be an optically directional 3dB fiber coupler, although other optical couplers may be utilized. In an embodiment in accordance with the invention, coupling of the optical signals is substantially independent of the polarization of optical signals. In an embodiment, the optical combining unit does not polarize the combined optical signal. In another embodiment, not shown, the optical pre-selector is in optical communication with one or more optical combining units that are polarization selective. Although the optical combining unit is described below as outputting two beams of the combined optical signal to the receiver, it should be understood that embodiments of the optical combining unit that output one or more beams of the combined optical signal are possible.

The receiver 114 is in optical communication with the optical combining unit 112 via output fibers 144. The receiver includes photodetectors 146 that are aligned to detect the optical signals that are output from the optical combining unit. The photodetectors generate electrical signals in response to the received optical signals. The electrical signals generated by the photodetector are provided to the processor 116 for use in characterizing the input signal. The connection between the receiver and the processor is depicted in Fig. 1 by line 148. Although not shown, the receiver may include additional signal processing circuitry such as signal amplifiers, filters, and signal combiners as is known in the field. The receiver may also be composed of polarization selective optics to permit polarization diverse reception and/or polarization analysis of the input signal.

The processor 116 receives an electrical signal from the receiver 114 and processes the electrical signal to determine an optical characteristic of the input signal. The processor may include analog signal processing circuitry and/or digital signal processing circuitry as is known in the field of electrical signal processing. In an embodiment, an analog signal from the receiver is converted into digital data and the digital data is subsequently processed.

Operation of the optical heterodyne detection system described with reference to Fig. 1 involves filtering the input signal 122 with the optical pre-selector 108 before the input signal is combined with the local oscillator signal 120. The optical pre-selector passes the filtered input signal in a wavelength band that tracks the swept local oscillator signal. The filtered input signal is combined with the swept local oscillator signal at the optical combining unit 112 to generate a combined optical signal. Portions of the combined optical signal are then detected by the photodetectors 146. Electrical signals generated by the photodetectors are then received by the processor 116 and processed to determine an optical characteristic of the input signal. The combination of the optical pre-selector, the pre-selector controller, the optical combining unit, and the photodetector creates an optical heterodyne detection system that filters the input signal before it is combined with the swept local oscillator signal to reduce noise and improve the dynamic range of the system. During operation of the system, the filter wavelength of the optical pre-selector accurately tracks, in real-time, the wavelength of the swept local oscillator signal.

As mentioned above, the technique for synchronizing the filter wavelength of an optical pre-selector 108 with the wavelength of a swept local oscillator 120 involves generating at least one synchronization signal as the local oscillator signal is swept across a range of wavelengths and adjusting the filter wavelength of the optical pre-selector in response to the at least one synchronization signal. To successfully implement the synchronization technique, it is important that the optical pre-selector have certain characteristics. Specifically, the optical pre-selector should have a highly repeatable drive signal-to-filter wavelength relationship at a given set of environmental conditions, such as temperature and humidity (e.g., the entire filter curve of the optical pre-selector could shift by an offset with a change in environmental conditions), and the tuning speed of the optical pre-selector should be at least as fast as the local oscillator sweep rate. If the offset in the filter curve with temperature (or other environmental conditions) is repeatable, then temperature variations can be compensated for by passive calibration (e.g., by using a calibration look-up table) and if the offset with temperature (or other environmental conditions) is not repeatable, then an active calibration, as discussed below, can be performed before each sweep or the filter can be temperature controlled. One optical pre-selector that exhibits the above-identified characteristics is an acousto-optic tunable filter (AOTF). AOTFs generally exhibit the following characteristics:
1) The center wavelength of an AOTF is determined by the applied drive frequency at a given temperature. This relationship is highly repeatable at a given temperature.
2) The entire filter curve of an AOTF shifts by an offset with temperature change. For most practical operating conditions, the temperature drift of an AOTF is relatively slow (e.g., over a time scale of seconds).
3) The typical response time of an AOTF is approximately 10 - 100 µs depending on construction. This response time is fast enough to track a local oscillator at sweep rates of 100 - 1,000 nm/s for 3-dB filter widths of approximately 0.2 nm.

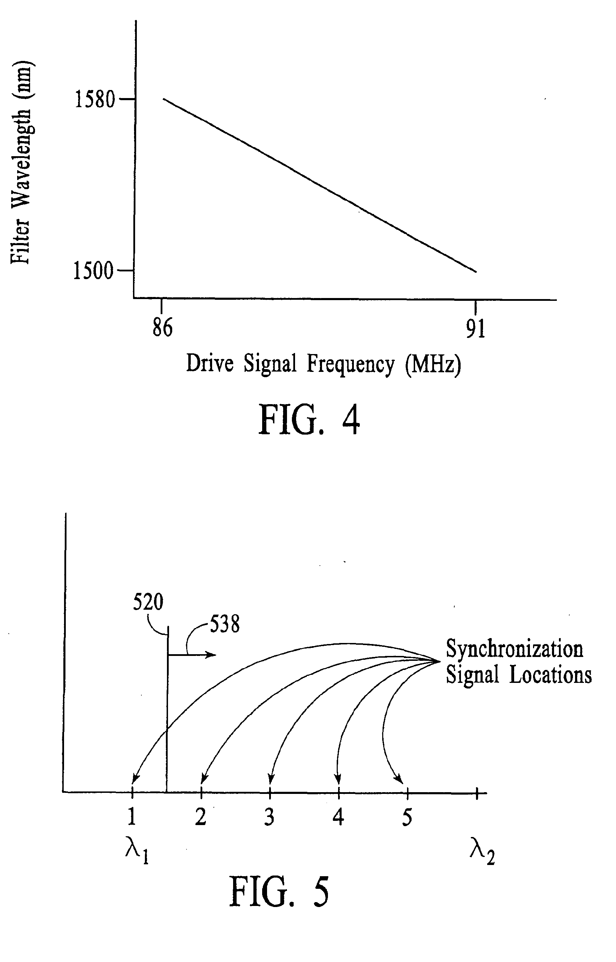

For descriptive purposes, the optical pre-selector 108 depicted in Fig. 1 is assumed to be an AOTF, although other optical pre-selectors that exhibit the above-identified characteristics may be utilized. As described above, an important characteristic of the optical pre-selector is that the filter has a highly repeatable drive signal-to-filter wavelength relationship. That is, at a given set of environmental conditions, the pre-selector should exhibit the same filter wavelength in response to a given drive signal. The drive signal-to-filter wavelength relationship can be linear or non-linear as long as the relationship is repeatable at a given set of environmental conditions. Fig. 4 depicts a plot of a relationship between the frequency of the drive signal (in MHz) that is applied to an AOTF and the corresponding filter wavelength (in nm). For operation over a relatively narrow sweep range that is much smaller than the optical wavelength of the local oscillator (e.g., a sweep range of 50 nm and a local oscillator wavelength of 1,550 nm), the relationship can be approximated as a linear function for tracking purposes if the filter has a relatively large 3-dB width (e.g., 2 nm). In an alternative embodiment in accordance with the invention, the optical pre-selector is temperature controlled. A temperature controlled pre-selector could be utilized whether the pre-selector has a repeatable or non-repeatable tuning curve as a function of temperature, although the drive signal-to-filter wavelength relationship must be repeatable.

In the embodiment in accordance with the invention of Fig. 1, the pre-selector controller 110 includes a wavemeter 150, a fringe counter 152, and a drive signal generator 154. The wavemeter is a device that is capable of measuring the relative or absolute optical wavelength or optical frequency of the local oscillator signal 120 as the local oscillator signal is swept across a range of wavelengths. Absolute wavelength measurements typically require a light source as an absolute wavelength reference. An example of a wavemeter is an interferometric device. Measurement of the relative wavelength is sufficient for the purpose of wavelength tracking in certain cases. One case in which the relative wavelength is sufficient for wavelength tracking is when the wavelength of the local oscillator and the filter wavelength are initially set to match each other and the filter wavelength has an approximately linear relationship with the drive signal. In the general case, measurement or knowledge of the absolute wavelength is required if the filter wavelength and the drive signal have a non-linear relationship, particularly if the 3-dB filter width is relatively narrow. In operation, the wavemeter outputs wavelength information to the fringe counter. In the embodiment of Fig. 1, the wavemeter is a Michelson interferometer that includes a coupler 156, a reference fiber 158, a delay fiber 160 with a delay of τ, two corresponding Faraday mirrors 162, and a photodetector 164. The wavemeter splits the local oscillator signal into two portions and imparts a delay on the portion of the signal that travels through the delay fiber. When the local oscillator signal is swept, the known delay between the signals in the reference fiber and the delay fiber provides information that can be used to determine the change in wavelength of the local oscillator signal. Although a particular embodiment of a wavemeter is depicted in Fig. 1, other systems and methods can be used to obtain the wavelength information.

The fringe counter 152 receives wavelength information from the wavemeter 150 and outputs synchronization signals to the drive signal generator 154 in response to the wavelength information. In the embodiment of Fig. 1, as the local oscillator sweeps in wavelength, the two light beams returning from the reference and delay arms of the wavemeter interfere and generate an interference intensity signal that is detected by the photodetector 164. The interference intensity signal varies alternately between maximum intensity and a lower intensity level due to the interference. Each cycle of signal variation from low intensity to maximum intensity and back to low intensity is referred to as a "fringe". The fringes are identified and counted by the fringe counter. Fringe counting provides information about the relative optical frequency of the local oscillator. Based on the number of fringes identified, the fringe counter generates at least one synchronization signal as the local oscillator signal is swept across a range of wavelengths. Depending on the nature of the drive signal generator, the synchronization signals can be a series of trigger signals or a number indicating the relative or absolute wavelength of the local oscillator. Note that all of the discussions above can be presented in terms of optical wavelength or optical frequency, since optical frequency (*f*) and optical wavelength (λ) are related by c = *f*λ, where c is the speed of light.

The drive signal generator 154 receives synchronization signals from the fringe counter 152 and generates drive signals in response to the synchronization signals. In an embodiment, the drive signal generator changes the drive signal by a pre-established increment in response to each synchronization signal. For example, when the pre-selector 108 is an AOTF that is tuned in response to an RF drive signal, the frequency of the RF drive signal is adjusted in response to each synchronization signal. The drive signal generator for an AOTF may be embodied as a direct digital synthesizer or a voltage controlled oscillator.

In operation, the calibration process involves initially setting the filter wavelength of the optical pre-selector 108 and the wavelength of the local oscillator signal 120 to matching wavelengths at the beginning of a local oscillator sweep. As used herein, the filter wavelength of the optical pre-selector and the wavelength of the local oscillator signal are considered to be matching if they are set to a predetermined offset. The tolerance margin (i.e., the deviation from the predetermined offset value) is at least partially dependent on the amount of signal loss and tracking error that is tolerable in the heterodyne detection system. The predetermined offset may be zero or some non-zero value. A non-zero offset value may be used to enable, for example, optical image rejection. The initial matching of the filter wavelength and the wavelength of the local oscillator signal can be accomplished using different techniques and may involve periodic calibration process. According to one calibration process, the local oscillator signal is fed through the optical pre-selector while the local oscillator signal is fixed at the initial wavelength. The filter wavelength of the optical pre-selector is dithered and the optical power from the pre-selector is measured to find the maximum power. The wavelength at which maximum power occurs corresponds to the filter wavelength of the optical pre-selector. The filter wavelength of the optical pre-selector is then adjusted to match the wavelength of the local oscillator signal. According to another calibration process, the local oscillator signal is fed through the optical pre-selector while the local oscillator signal is fixed at the initial wavelength. The filter wavelength of the optical pre-selector is first set close to the initial local oscillator wavelength (e.g., λ₁) using the predetermined relationship between the filter wavelength and the drive signal at a given temperature. Next the filter wavelength is swept through a wavelength range that includes the wavelength of the local oscillator signal and the output power is then measured to find the maximum output power. The drive signal of the optical pre-selector is then set such that the filter wavelength matches the measured maximum output power. The matching calibration is periodically needed to account for drifts in the filter wavelength of the optical pre-selector that may be caused by changes in environmental conditions (typically temperature changes in the case of an AOTF). For repeated sweeps with the same starting local oscillator wavelength, the calibration process can be performed every M sweeps, where M ≥ 1. The magnitude of M depends on how much the pre-selector drifts due to environmental conditions. The smaller the drift, the larger M can be. At the beginning of sweeps in which a matching calibration is not needed, the filter wavelength can be matched to the initial wavelength of the local oscillator signal by applying the drive signal used in the calibration process in the previous sweep.

In alternative calibration approaches, the local oscillator wavelength can be varied as the pre-selector is set to its nominal wavelength in order to determine the relative operating frequencies. Additionally, electrical communications from the processor 116, the local oscillator source 102, and the optical pre-selector 108 may be provided to the drive signal generator 154 to relay pertinent information such as the absolute wavelength of the local oscillator signal 120 or the temperature of the optical pre-selector 108 to facilitate wavelength matching and tracking.

Once the filter wavelength and the wavelength of the local oscillator signal 120 match each other, the local oscillator signal can be swept across a range of wavelengths. For example, the local oscillator signal can be swept from wavelength₁ (λ₁) to wavelength₂ (λ₂). For the sake of the following discussions, it is assumed that λ₁ ≤ λ₂ without loss of generality. Synchronization signals are then generated at desired intervals although other intervals are possible. In an embodiment, the synchronization signals are generated at wavelength-dependent intervals. For example, N synchronization signals can be generated at constant wavelength intervals that are defined by ((λ₂ - λ₁)/N). In an embodiment, the fringe counter 152 includes a circuit that detects zero crossings of the interference signal and generates synchronization signals every P fringes, where P is an integer greater than or equal to 1. The drive signal generator is configured such that every time it receives a synchronization signal from the fringe counter, the drive signal frequency is changed by a pre-determined amount such that the filter wavelength of the AOTF is adjusted accordingly. The pre-determined amount may depend in part on information such as the absolute wavelength of the local oscillator signal 120, the optical pre-selector 108 temperature, and/or the input signal 122 power levels. Although wavelength intervals and frequency intervals are assumed to be equivalent for illustrative purposes, the exact relationship depends on the absolute optical wavelength or frequency about which the interval is centered.

Fig. 5 is a plot of signal power versus wavelength that depicts a local oscillator signal 520 that is swept across a range of wavelengths (e.g., from λ₁ to λ₂). In this embodiment, the initial offset between the local oscillator wavelength and filter wavelength is set to be zero and synchronization signals are generated at equal wavelength intervals, although this is not critical to the invention. The graph depicts the points at which N synchronization signals (wherein N = 5) are generated. In Fig. 5, the first synchronization signal is generated when the local oscillator signal is at λ₁ and the last synchronization signal is generated at λ₂ - (λ₂ - λ₁)/N. In this case, the optical pre-selector is likely to lead the local oscillator in terms of wavelength. Alternatively, the first synchronization signal is generated when the local oscillator signal is at λ₁ + (λ₂ - λ₁)/N and the last synchronization signal is generated at λ₂. In this case, the optical pre-selector is likely to lag behind the local oscillator in terms of wavelength. Other pre-established intervals for generating synchronization signals may be implemented. Additionally, smoothing can be applied to the drive signals so that the filter wavelength moves in a smooth fashion.

Note that a fringe counter is one technique for converting the interference signal measured by photodetector 164 to optical frequency information. This technique is well suited for coarse wavelength measurements because the wavelength resolution is more or less limited by one fringe (or a fraction of the fringe). In an alternative embodiment, orthogonal filters can be used to recover the relative optical frequency information. The orthogonal filter technique is capable of providing wavelength resolution typically as fine as one-hundredth of a fringe. However, the coarse wavelength resolution of a fringe counter should be adequate for the purpose of wavelength tracking (at least for AOTFs), since the typical 3-dB filter width of an AOTF is 0.1 - 1 nm. For example, a fiber interferometer with a path difference of 8 cm between the two arms provides a wavelength resolution of approximately 10 pm when operating near 1,550 nm.

In another embodiment in accordance with the invention, the drive signal generator may include a microprocessor that incorporates the function of the fringe counter. Wavelength information can be extracted from the interference signal using digital signal processing (e.g., orthogonal filters). The microprocessor then uses the wavelength information to modify the drive frequency of the signal controlling the optical pre-selector. Modification of the drive frequency can be done at a rate that is limited by the clock of the microprocessor, effectively producing nearly continuous updates of the drive frequency. In this case, the number (N) of synchronization signals per sweep is a very large number. In practice, the tracking error is limited by various factors such as response time of the optical pre-selector and resolution of the wavemeter.

In the embodiment of Fig. 1, the drive signal generator 154 adjusts the drive signal by a known increment in response to each synchronization signal that is received from the fringe counter 152. Where the pre-selector is an AOTF, the filter wavelength of the AOTF is adjusted by changing the RF frequency of the drive signal in response to each synchronization signal. As an alternative to the incremental approach, the drive signal generator could be configured to generate a particular drive signal in response to each synchronization signal. For example, in response to synchronization signal 1, the drive signal is generated at a first value, in response to synchronization signal 2, the drive signal is generated at a second value, and so on.

In an embodiment in accordance with the invention, the temperature changes of the optical pre-selector are compensated for by obtaining a temperature calibration of the optical pre-selector, monitoring the temperature of the optical pre-selector, and taking into account the temperature calibration during generation of the filter drive signal.

The number of synchronization signals per sweep, which are necessary to maintain synchronization between the filter wavelength of the pre-selector 108 and the wavelength of the local oscillator signal 120, depends in part on the tuning repeatability of the local oscillator source 102 and the optical bandwidth of the pre-selector. If the local oscillator source sweeps in a very repeatable fashion and/or the optical bandwidth of the pre-selector is relatively large, then N = 1 (one-point synchronization at the beginning of each sweep) may be sufficient to achieve accurate synchronization.

In an embodiment in accordance with the invention, the center of the filter passband is tuned to the wavelength of the swept local oscillator signal during local oscillator signal tracking. In another embodiment, the center of the filter passband is tuned slightly off the local oscillator wavelength in order to generate the heterodyne signal at a higher frequency, for example, in a situation where image rejection is important.

Although in the embodiment of Fig. 1 the optical pre-selector 108 is optically connected to the input fiber 106 before the optical combining unit 112, the pre-selector could alternatively be located in the optical path between the optical combining unit and the receiver 114 to filter the combined optical signal or in the optical path between the local oscillator source 102 and the optical combining unit to filter the local oscillator signal.

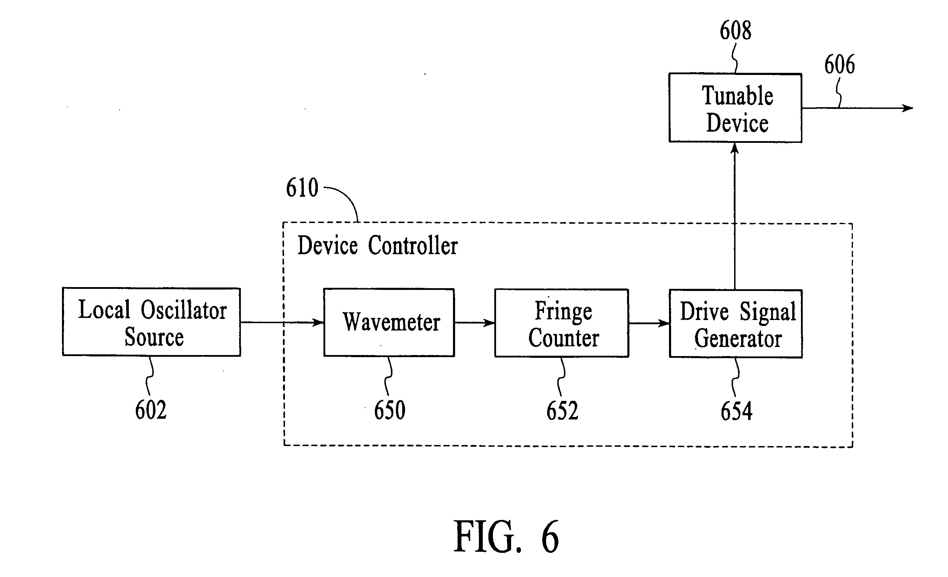

The above-described techniques for ensuring that a tunable optical pre-selector accurately tracks the wavelength of a swept local oscillator signal can be applied to systems other than the optical heterodyne detection system that is depicted in Fig. 1. In addition, the technique for ensuring that a tunable optical pre-selector accurately tracks the wavelength of a swept local oscillator signal can be applied to other tunable devices, such as tunable optical filters, tunable lasers, and tunable optical detectors, which have an operating characteristic that can be tuned. The tunable device may have optical ports, electrical ports, or a combination thereof. The operating characteristic of the tunable device may include the center wavelength of an optical filter, the wavelength of laser output, or the active wavelength band of an optical detector. For example, Fig. 6 depicts a system for synchronizing an operating characteristic of a tunable device with the wavelength of a local oscillator signal as the local oscillator signal is swept across a range of wavelengths. The system includes a tunable device 608 that has some output 606, a local oscillator source 602, and a device controller 610. The device controller includes a wavemeter 650, a fringe counter 652, and a drive signal generator 654. The elements of Fig. 6 are equivalent to the corresponding elements in Fig. 1. Additionally, the system operates as described above. Briefly, the local oscillator source generates a local oscillator signal that is swept across a range of wavelengths. Synchronization signals are generated by the device controller as the local oscillator source is swept across the range of wavelengths and the operating characteristic of the tunable device is adjusted in response to the synchronization signals.

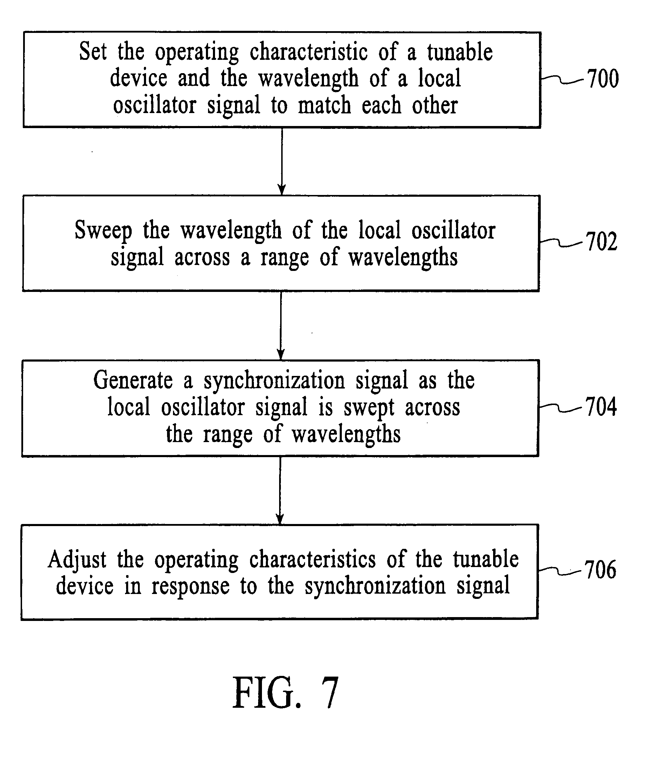

Fig. 7 depicts a process flow diagram of a method for synchronizing the an operating characteristic of a tunable device with the wavelength of a local oscillator signal. At step 700, the operating characteristic of a tunable device and the wavelength of a local oscillator signal are set to match each other. At step 702, the wavelength of the local oscillator signal is swept across a range of wavelengths. At step 704, a synchronization signal is generated as the local oscillator signal is swept across the range of wavelengths. At step 706, the operating characteristic of the tunable device is adjusted in response to the synchronization signal.

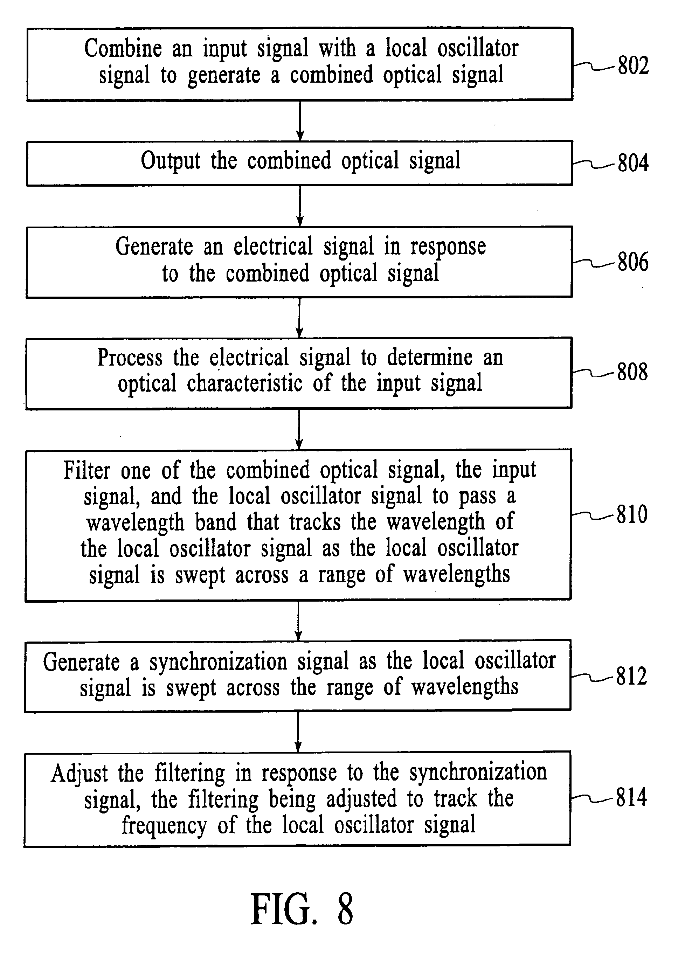

Fig. 8 depicts a process flow diagram of a method for monitoring an optical signal utilizing optical heterodyne detection. At step 802, an input signal is combined with a local oscillator signal to generate a combined optical signal. At step 804, the combined optical signal is output. At step 806, an electrical signal is generated in response to the combined optical signal. At step 808, the electrical signal is processed to determine an optical characteristic of the input signal. At step 810, one of the combined optical signal, the input signal, and the local oscillator signal is filtered to pass a wavelength band that tracks the wavelength of the local oscillator signal as the local oscillator signal is swept across a range of wavelengths. At step 812, a synchronization signal is generated as the local oscillator signal is swept across the range of wavelengths. At step 814, the filtering is adjusted in response to the synchronization signal, the filtering being adjusted to track the frequency of the local oscillator signal. It should be understood that certain steps may be performed simultaneously with other steps and that the steps need not be performed in the order depicted.

In an embodiment in accordance with the invention, the wavelength of the local oscillator signal is tracked in the forward and/or backward directions. That is, the wavelength tracking can be done as the local oscillator sweeps from a lower wavelength to a higher wavelength or from a higher wavelength to a lower wavelength. To accomplish forward and backward wavelength tracking, a wavemeter that is capable of measuring wavelength changes in the positive direction and negative direction is utilized, for example, using a 3 x 3 fiber coupler.

Although specific embodiments in accordance with the invention have been described and illustrated, the invention is not limited to the specific forms and arrangements of parts so described and illustrated. The invention is limited only by the claims.

## Claims

1. A method for synchronizing an operating characteristic of a tunable device with the wavelength of a local oscillator signal comprising:
sweeping (702) the wavelength of said local oscillator signal across a range of wavelengths;
generating (704) a synchronization signal as said local oscillator signal is swept across said range of wavelengths; and
adjusting (706) the operating characteristic of a tunable device (108; 608) in response to said synchronization signal.

2. The method of claim 1 including an initial step of setting (700) the operating characteristic of said tunable device (108; 608) and the wavelength of said local oscillator signal to match each other before the wavelength of said local oscillator signal is swept across a range of wavelengths.

3. The method of claim 1 or 2 wherein generating (704) said synchronization signal involves generating said synchronization signal in response to wavelength information that is related to said local oscillator signal.

4. The method of any of claims 1 to 3 wherein generating (704) said synchronization signal involves generating said synchronization signal in response to wavelength information that is obtained by measuring said local oscillator signal.

5. The method of any of claims 1 to 4 wherein generating (704) said synchronization signal includes generating N discrete synchronization signals at wavelength-dependent intervals.

6. A system for synchronizing an operating characteristic of a tunable device with the wavelength of a local oscillator signal comprising:
a tunable device (108; 608) having an output characteristic that is tunable; and
a device controller (110; 610) in optical communication with a local oscillator source and in drive signal communication with said tunable device, said device controller being configured to generate a synchronization signal as said local oscillator signal is swept across a range of wavelengths and to generate a drive signal, which sets the operating characteristic of said tunable device, in response to said synchronization signal.

7. The system of claim 6 wherein the operating characteristic of said tunable device (108; 608) and the wavelength of said local oscillator signal are initially set to match each other.

8. The system of claim 6 or 7 wherein said tunable device (108; 608) exhibits a repeatable relationship between its operating characteristic and an applied drive signal.

9. The system of any of claims 6 to 8 wherein said device controller (108; 608) includes a wavemeter (150; 650), in optical communication with said local oscillator signal, which generates wavelength information related to said swept local oscillator signal.

10. The system of any of claims 6 to 9 wherein N discrete synchronization signals are generated by said device controller (108; 608) at wavelength-dependent intervals.
